# EUROPEAN PATENT APPLICATION

(11) **EP 3 176 506 A1**
(43) Date of publication of application: **07.06.2017**
(21) Application number: 14898577.3
(22) Date of filing: 07.08.2014
(51) Int. Cl.: F23R 7/00, F02K 7/067, F02C 5/11

(54) **METHOD FOR BURNING FUEL AND DETONATION APPARATUS FOR CARRYING OUT SAME**

(30) Priority: 01.08.2014 RU 2014131935
(71) Applicant: Airbus Group Innovations Sk LLC, Moscow 109028 (RU); Lavrentyev Institute of Hydrodynamics of Siberian Branch of Russian Academy of Sciences, Novosibirsk 630090 (RU)
(72) Inventor: BYKOVSKIJ, Fedor Afanasevich, Novosibirsk 930090 (RU); ZHDAN, Sergej Andreevich, Novosibirsk 930090 (RU); VEDERNIKOV, Evgenij Fedorovich, Berdsk 633001 (RU)
(74) Representative: Chimini, Francesco
(86) International application number: PCT/RU2014/000593
(87) International publication number: WO 2016/018172

(57) **Abstract**

The invention relates to fuel combustion methods and detonation devices implementing such methods, and can be used for combustion of various types of fuel in flying and ground vehicle engines, stationary power plants and in chemical industry. The oxidizer flow is transformed by directing it into the chamber through a profiled annular slit, thus increasing the oxidizer discharge coefficient in the forward direction, i.e. into the combustion chamber, and reducing the ingress of detonation products in backward direction. The device is supplemented with a means functioning as a gas-dynamic valve that can be designed, for example, as a specifically profiled annular slit with a smooth inlet and sharp edges at the outlet on the combustion chamber side. The application of the invention will help boost the functional capabilities of the method and device, and enhance the efficiency of the detonative fuel combustion method, while increasing the producibility and cost efficiency of the new method and device. The invention allows using a wide array of fuels, including gaseous, liquid and finely divided solid fuels forming combustible mixtures when mixed with air. The invention makes it possible to use combustion chambers of different geometries best suited for specific fuel combustion scenarios. Besides, it enhances the efficiency and reliability of the combustion chamber.

## Description

The invention relates to power engineering and can be used for combustion of various types of fuel. Its applications will range from engine manufacturing, transport, stationary power plants to chemical industry.

Diverse fuel combustion methods and detonation devices implementing such methods are known to date, as evidenced by multiple patents: patent RU No. 2003923 (1993) [1], patent RU No. 2285143 (2004) [2], patent RU No. 2330979 (2006) [3], application RU No. 93001763 (1995) [4], patent RU No. 2294446 (2004) [5], patent FR No. 2004/001313 (2004) [6], patent EP 2525070 (2012) [7], patent RU No. 2435060 (2011) [8], application RU No. 93046334 (1993) [9], patent EP No. 2525062 (2012) [10], patent No. US 2005/0284127 (2005) [11].

Conventional turbulent fuel combustion which has come nearly to the end of its resources is sometimes replaced with detonative combustion. Detonative combustion is known to occur in longitudinal pulsating waves and in rotating (spin) detonation waves: the two regimes are described, for example, in the patents [1 - 10]. However the known detonation combustion methods and devices display several shortcomings. Some involve forced injection of an oxidizer jet [1,9], others use high-velocity air supply into flow-type and air-jet engine combustion chambers [2,7,8,11], whereas the pulse detonation engines provide cyclic (periodic) initiation of mixture detonation using a system of valves for components supply [3,4,5,6,10]. Other known methods involve detonation mixture pre-formation before the combustion chamber, which runs contrary to the explosion safety regulations, or use flow-swirling blades to generate centrifugal forces which produce a pressure gradient and mixture ingestion in the chamber while creating an additional hydrodynamic resistance [11].

The claimed method is most similar in its technical nature to the method described in the patent RU No. 2459150 (2009) [12], which the applicant has chosen as the prototype.

The known combustion method applied to combustible mixtures, i.e. fuel (propellant) and oxidizer (air), comprises the supply of one of said mixture reagents through injectors, with the other reagent ejected in continuous flow through a slit. For this purpose a detonation wave is incited in the combustion chamber and the second reagent is ejected from ambient environment into the low-pressure wave. The reagents are mixed right inside the chamber, with the second reagent sucked into the chamber from ambient environment in the low-pressure wave adjacent to the detonation front. The reagent supplied through the injectors is uniformly distributed along the chamber circumference at an angle to the continuous flow of the other reagent injected through the slit in the direction of the chamber exit.

Thus the known method comprises separate supply of fuel mixture components, i.e. uniformly distributed fuel jets supplied through the injector and continuous flow of oxidizer supplied through the annular slit, together forming a layer of combustible mixture such that self-sustaining spin detonation is initiated in the layer and maintained as long as said mixture components keep flowing into the chamber.

However the known method has some shortcomings in terms of functional capabilities and producibility due to high hydrodynamic losses of total pressure on oxidizer injector and inlet slit holes and the impact of detonation waves in the chamber on the performance of the fuel and oxidizer supply system.

The claimed device is most similar in its technical nature to the detonation device described in the patent RU No. 2459150 (2009) [12], which the applicant has chosen as the prototype.

The known device comprises an annular combustion chamber, a reagents mixing system (for the mixing of the combustible mixture components - fuel and oxidizer) placed near the chamber inlet, a supply system comprising an injector with holes uniformly spaced along the combustion chamber circumference, a products inlet and outlet and an ignition source. The combustion chamber is fitted with a flow turbulization means located near its inlet. The known combustion chamber width expands from the inlet toward the outlet. The chamber's front end-face has an annular slit for supplying one of the reagents in ejection mode. Placed opposite the slit is the annular injector which serves as the flow turbulizer. The injector's holes are tilted with reference to the reagent flow coming through the slit and are directed towards the outlet.

However the known device has some drawbacks, namely, lack of functional capabilities and producibility. The device's high hydrodynamic resistance at the air injection point inevitably leads to substantial total pressure losses in the mixture entering the chamber. Large amounts of combustion products penetrate into the air and fuel supply system, and mainly the air supply duct, thus hindering the development of detonative combustion.

Thus both the known method and device have apparent drawbacks, such as lack of functional capabilities and producibility.

The claimed inventions aim to enhance the functional capabilities and producibility of the fuel combustion method and the detonation device implementing such a method.

The essence of the claimed invention, as applied to the task at hand, consists in the modification (transformation), for example, narrowing or widening of the oxidizer flow (including the modification of its boundaries and inner flow), as opposed to the known fuel combustion method comprising separate supply of the combustible mixture components into the combustion chamber, with the fuel injected in equidistant jets (through the injector) and oxidizer (air) supplied in continuous annular flow (through the annular slit), said components forming a homogeneous annular layer of combustible mixture such that self-sustaining continuous spin detonation is initiated in the layer and maintained as long as said combustible mixture components keep flowing into the chamber. Said oxidizer flow is produced by supplying (passing) the oxidizer into the chamber through a specifically profiled slit with a smooth inlet and sharp edges at the outlet, which ensures better oxidizer flow motion in forward direction (into the chamber) and prevents (reduces) the backward penetration of detonation products (into the oxidizer supply system). The profiled annular slit acts as a gas-dynamic valve ensuring the oxidizer supply into the chamber and preventing the ingress of detonation products into the supply system.

Thus, according to the invention, the claimed engineering solution amounts to the modification (transformation) of the oxidizer flow shape and internal structure, for example, the flow narrowing or widening, by supplying (passing) the oxidizer into the combustion chamber through the specifically profiled slit with a smooth inlet and sharp edges at the outlet, as opposed to the known fuel combustion method comprising fuel and oxidizer supply in equidistant counter-jets and continuous flow, respectively, that merge into combustible mixture flow in the chamber. This ensures that the oxidizer has a higher discharge coefficient in forward direction (into the chamber) and hinders (reduces) the penetration of detonation products backward into the oxidizer supply system (reduces the products' backward discharge coefficient). Thus the above profiled annular slit serves as a gas-dynamic valve ensuring the oxidizer supply into the chamber and preventing the ingress of detonation products into the supply system.

Besides, the above action exerted on the flow is enhanced thanks to multiple (two or more) cyclic (periodic) modifications (transformations) of the shape and internal structure of the oxidizer flow directed through a package (set, row, cascade, etc.) of two or more equally wide annular slits specifically profiled as mentioned above. In such a case, the air entering the combustion chamber encounters the least resistance and the least total pressure loss, and the ingress of detonation products into the supply system is minimized. Adjusting the number of actions exerted and their orientations in space helps attain the optimal ratio between the input and output parameters of the forward and backward flows.

Possible oxidizer types can include, for example, oxygen, air, their mixtures or other agents, while fuels can be gaseous, liquid or solid (finely divided).

Besides, the transverse detonation wave rotation direction in the chamber is set up (implemented) by creating a tangential component in the oxidizer flow such that the flow becomes at least two-dimensional. For this purpose the oxidizer flow is swirled before it enters the slit (or a package of slits) using a swirling means, such as a centrifugal compressor, guide blades, etc., thus instigating further flow turbulization that intensifies the fuel and oxidizer mixing required for the continuous spin detonation to develop, which is especially important for the combustion of low-reactivity fuels.

To address the task at hand, the claimed method is implemented in the fuel detonation combustion device which, according to the invention, is supplemented with a means for improving the forward oxidizer flow into the chamber (increasing its discharge coefficient) and preventing backward penetration of detonation products into the oxidizer supply system (decreasing their backward discharge coefficient), such means functioning as a gas-dynamic valve that can be designed, for example, as a specifically profiled annular slit with a smooth inlet and sharp edges at the outlet on the chamber side, as opposed to the known device fitted with a fuel and oxidizer supply system, an annular combustion chamber, a fuel and oxidizer mixing system located near the chamber inlet and comprising uniformly spaced fuel injector holes and an annular oxidizer inlet slit, an outlet for the products and an ignition source. Thus the claimed detonation device is clearly distinctive in that it is supplemented with a means for increasing the oxidizer discharge coefficient in forward direction, i.e. into the combustion chamber, and hindering the penetration of detonation products in backward direction, i.e. into the oxidizer supply system (reducing the products' backward discharge coefficient), such means functioning as a gas-dynamic valve that can be designed, for example, as a specifically profiled annular slit with a smooth inlet and sharp edges at the outlet on the combustion chamber side. The fuel injector holes can be located either on the chamber side walls or on its front end-face.

In addition, the above means functioning as a gas-dynamic valve can be designed as a package (set, row, cascade, etc.) of two or more equally wide annular slits profiled as mentioned above. The distance between adjacent slits and their orientations in space are optimized to ensure stable operation of the above gas-dynamic valve (i.e. to attain the optimal ratio between the input and output parameters of the forward and backward flows) in steady continuous spin detonation. For example, the distance between said slits is set equal to the slit width.

The oxidizer supply system (annular manifold) is also fitted with a means for swirling the oxidizer flow before it enters the above profiled slit (or a package of such slits), for example, a compressor, guide blades, etc., to create a tangential component in the oxidizer flow inside the chamber, to improve the mixing quality thanks to additional turbulization and to create conditions for specifying and implementing a certain (required) transverse detonation wave rotation direction.

Besides, the fuel injector holes are located on the outer or inner or both chamber walls and/or on its end-face.

The combustion chamber's annular channel is formed by the outer and inner walls that can, for example, be cylindrical, conical and/or profiled and/or combined but do not have to be identical. For example, the outer wall can be cylindrical and the inner wall conical or conical and cylindrical combined, etc.

Besides, the annular channel can be formed by one cylindrical and two flat or conical radial walls spaced an equal or variable distance apart. The oxidizer supply slit (or package of slits lying in the same plane) is located on the cylindrical surface, while the fuel injector holes are located on one or both chamber walls and/or on its cylindrical surface.

In the first case the cylindrical wall is located in the center of the chamber (in the smaller diameter section) and the products exit the chamber through the gap between the flat (or conical) walls in the direction from the center toward the periphery. In the second case the cylindrical wall has the biggest diameter and the products flow out through the hole of smaller diameter located in the center of one or both flat (or conical) chamber walls.

Thus in one case fuel and air (oxidizer) are supplied from the cylindrical surface toward the periphery with the combustion products exiting through an open gap between the flat walls, while in the opposite case fuel and air are supplied from the peripheral cylindrical surface toward the center. One or both flat radial or conical walls have a detonation products outlet hole in the center.

Furthermore, cylindrical, flat or conical combustion chambers can be grouped into a package (assembly) with a common or individual oxidizer and fuel inlet(s) and a common or individual detonation products outlet(s).

It is the claimed design differences and features of the detonative combustion device that enable implementing the claimed method and thus attaining the goal. This leads to the conclusion that the claimed inventions share the same inventive concept.

The technical output that may be derived from the invention consists in functionality and producibility enhancements.

It becomes possible to perform detonative combustion with the least possible total pressure losses and weakest possible impact of the detonation processes inside the chamber on the air supply system performance. Tangential air flow swirling produces tangentially rotating transverse detonation waves in continuous spin detonation, while creating additional turbulization in the chamber, thus facilitating the fuel and oxidizer (air) mixing, while ensuring that the device can operate in both the continuous spin detonation mode and in cyclic mode with transverse and longitudinal detonation waves and would not require any additional mechanical devices (for example, a valve system). Besides, this further enhances the chamber cost efficiency and operational reliability.

The invention is explicated by the drawings below.

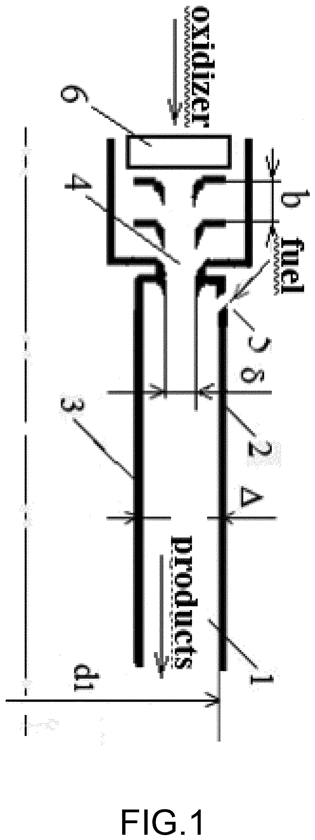

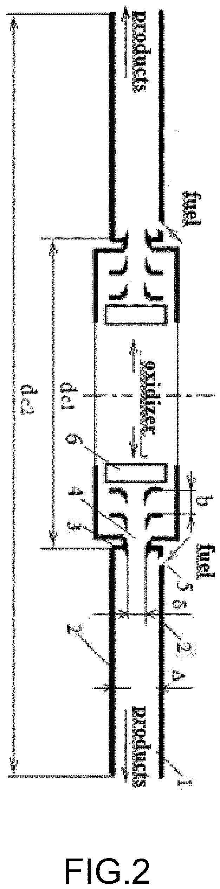

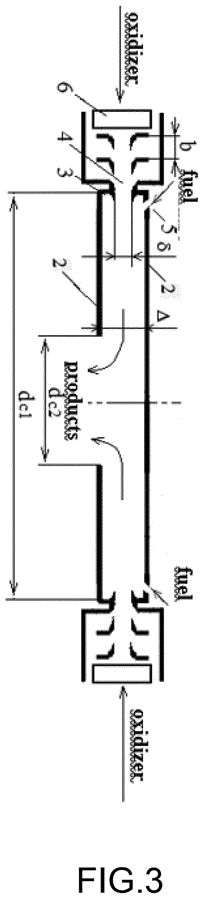

Fig. 1 features a schematic of the fuel detonation combustion device with cylindrical outer and inner walls. Fig. 2 offers a schematic of the fuel detonation combustion device with one inner cylindrical and two flat walls and the initial mixture components and detonation products flows directed from the center toward the periphery. Fig. 3 shows a schematic of the fuel detonation combustion device with one outer cylindrical and two flat walls and the initial mixture components and detonation products flows directed from the periphery toward the center.

The device in Fig. 1 comprises the combustion chamber casing 1 formed by the cylindrical walls: the outer wall 2 and the inner wall 3. The chamber's front end has a package of profiled annular slits 4 for oxidizer (for example, air) injection from the supply system. Placed opposite the slits outlet is the fuel injector 5 with holes uniformly spaced along the chamber wall circumference 2 (possibly, wall 3 too in two-way fuel supply) at an angle to the oxidizer supply direction. The swirler 6 is placed at the annular slit package inlet.

The device operates as follows.

Air enters the chamber 1 via the swirler 6 and the package of annular slits 4. Fuel is supplied through the injector 5. Fuel is mixed with air and ignited by an electrical charge, fusible wire or other thermal pulse.

High-frequency tangential or longitudinal instability that develops in the combustion products evolves into rotating (spin) or pulsating transverse or longitudinal detonation waves after several milliseconds. Smooth air injection from the supply system into the chamber ensures the highest possible flow rate and the lowest possible total pressure losses, while the sharpedge outlet ensures the smallest possible ingress of detonation products into the air supply system as the detonation wave comes close to said system or any of its portions. The centrifugal compressor or guide blades that can act as swirlers set the transverse detonation wave rotation direction. Two-way fuel supply makes sure it gets mixed with the oxidizer in the best possible way. Detonation continues as long as air and fuel are supplied into the chamber.

The fuel detonation combustion device formed by one inner cylindrical wall and two flat walls with the initial components and products flowing from the center toward the periphery (see Fig. 2) comprises the combustion chamber casing 1 formed by the flat walls 2 and the inner cylindrical wall 3 that accommodates a package of profiled annular slits 4. The oxidizer flows from the supply system into the chamber 1 through the slits 4 and the fuel passes through the injector 5 placed opposite the slits 4, said injector having holes oriented at an angle to the oxidizer flow direction and uniformly distributed along the chamber wall circumference 2 or over the cylindrical surface 3. The swirler 6 is placed at the annular slit package inlet. The device operates in the same way as in Fig. 1, except that the fuel and air (oxidizer) are supplied from the cylindrical surface toward the periphery and the detonation products escape into the environment through the gap between the flat walls 2.

The fuel detonation combustion device formed by one outer cylindrical wall and two flat walls with the initial components and products flowing from the periphery toward the center (see Fig. 3) comprises the combustion chamber casing 1 formed by the flat walls 2 and the outer cylindrical wall 3 that accommodates a package (set) of profiled annular slits 4. The oxidizer flows from the supply system into the chamber 1 through the slits 4 and the fuel passes through the injector 5 placed opposite the slits 4, said injector having holes oriented at an angle to the oxidizer flow direction and uniformly distributed along the chamber wall circumference 2 or over the cylindrical surface 3. The swirler 6 is placed at the annular slit package inlet. One or both flat walls 2 have a products outlet hole. The device operates in the same way as in Fig. 1, except that the fuel and air are supplied from the peripheral cylindrical surface toward the center and the detonation products escape into the environment through the hole in one or both flat walls 2.

The application of the claimed invention based on a specific oxidizer flow setup, for instance, a specific air flow pattern in the supply system, will help enhance the functional capabilities and efficiency of the fuel combustion method implemented in the detonation device, while increasing the producibility of both the method and device and augmenting the cost efficiency and reliability of the combustion chamber.

The invention can be used in combustion chambers tailored for various applications, such as flying and ground vehicle engines, stationary power plants, MHD generators, chemical reactors and other devices. It supports a broad variety of fuels, including gaseous, liquid and finely divided solid fuels forming combustible mixtures when mixed with oxidizer (air). The invention makes it possible to build combustion chambers of different geometries best suited for specific fuel combustion environments.

### Literature

1. Bykovskii F.A., Voitsekhovsky B.V., Mitrofanov V.V. Fuel combustion method. Patent RU No. 2003923 (1993).
2. Ivanov M.S., Kudryavtsev M.S., Trotsyuk A.V., Fomin V.M. A detonative combustion method for the supersonic ram-jet engine. Patent RU No. 2285143 (2004).
3. Ulyanitsky V.Yu., Shtertser A.A., Zlobin S.B., Kiryakin A.L. Thrust generation method. Patent RU No. 2330979 (2006).
4. Vasilyev K.A. A method for fuel combustion in the combustion chamber. Application RU No. 93001763 (1995
5. Daniau E. Pulse detonation engine. Patent RU No. 2294446 (2004).
6. Daniau E. Patent FR No. 2004/001313 (2004).
7. Falempin F.; Le Naour B. Ramjet engine with detonation chamber and aircraft comprising such a ramjet engine. Patent EP Nº 2525070 (2012 Γ.).
8. Falempin F., Daniau E., Bobo E., Minard J.-P. Pulse detonation engine operating with an air-fuel mixture. Patent RU No. 2435060 (2011).
9. Antonenko V.F., Mass A.M., Minin S.M., Pushkin R.M., Slovetsky D.I., Smirnov V.I., Tarasov A.I. Thrust generation method and device. Application RU No. 93046334 (1993).
10. Falempin F.; Le Naour B. Turbomachine with detonation chamber and aircraft provided with such a turbomachine, Patent EP Nº 2525062 (2012 r.).
11. Akihiro Tobita (JP), Toshitaka Fuj iwara (JP), Piotr Wolanski, Warshaw (PL). Detonation engine and flying object provided therewith. United States, Patent Nº US 2005/0284127 A1 (2005 r.).
12. Bykovskii F.A., Zhdan S.A., Vedernikov Ye.F., A method for detonative combustion of fuel mixtures and a device implementing such a method. Patent RU No. 2 459 150 (2009).

## Claims

1. A fuel combustion method comprising the supply of fuel in equidistant counter-jets and oxidizer in continuous flow, with the combustible mixture flow forming in the chamber and self-sustained continuous spin detonation initiated in said flow and maintained as long as the combustible mixture components keep flowing into the chamber, **characterized in that** the oxidizer flow shape and internal structure are modified, for example, narrowed or widened, by supplying the oxidizer into the chamber through a specifically profiled slit with a smooth inlet and sharp edges at the outlet, ensuring that the oxidizer has a higher discharge coefficient in forward direction toward the chamber and hinders the penetration of detonation products backward into the oxidizer supply system by reducing the products' backward discharge coefficient, thus ensuring that said profiled annular slit functions as a gas-dynamic valve enabling oxidizer supply into the chamber and preventing the detonation products ingress into the supply system.

2. The method according to claim 1, wherein said action exerted on the flow is intensified thanks to two or more cyclic modifications of the shape and internal structure of the oxidizer flow directed through a package, or set, or row, or cascade, of two or more equally wide annular specifically profiled slits.

3. The method according to claim 1 or 2, wherein oxygen, air, their mixtures or other agents are used as oxidizers, while fuels come in gaseous, liquid or solid, finely divided, form.

4. The method according to claim 3, wherein the transverse detonation wave rotation direction in the chamber is set up by creating a tangential component in the oxidizer flow such that the flow becomes at least two-dimensional, said effect being achieved by swirling the flow before the package of slits inlet using a swirler, for example, a centrifugal pump or guide blades.

5. Detonation device for implementing the fuel combustion method according to claim 1, said device comprising a fuel and oxidizer supply system, an annular combustion chamber, a fuel and oxidizer mixing system placed near the chamber inlet and containing equidistant fuel nozzle holes and an annular oxidizer inlet slit, and a combustion products outlet hole, **characterized in that** it is provided with means for enhancing the oxidizer discharge coefficient in forward direction, i.e. into the combustion chamber, and hindering the penetration of detonation products in backward direction, i.e. into the oxidizer supply system, such means functioning as a gas-dynamic valve and designed, for example, as a specifically profiled annular slit with a smooth inlet and sharp edges at the outlet on the combustion chamber side.

6. Device according to claim 5, functioning as a gas-dynamic valve and comprising a package, or set, or row, or cascade, of two or more equally wide annular profiled slits, with the distances between adjacent slits optimized to ensure stable operation of the above gas-dynamic valve, for example, set equal to the slit width.

7. Device according to claim 5 or 6, wherein the oxidizer supply system is supplemented with a swirler, for example, a centrifugal compressor, guide blades, etc. that swirl the oxidizer flow before it enters said profiled slit or package of slits.

8. Device according to claim 5 or 7, wherein the fuel injector holes are located on the outer or inner chamber wall or on both walls and/or on its end-face.

9. Device according to claim 5 or 8, wherein the chamber's annular channel is formed by the outer and inner walls, for example, cylindrical, conical and/or profiled walls and a combination thereof.

10. Device according to claim 5 or 9, wherein the chamber's annular channel is formed by one cylindrical and two flat or conical radial walls spaced an equal or variable distance apart, said cylindrical surface having an oxidizer supply slit or package of slits lying in the same plane, with the fuel injector holes located on one or both chamber walls and/or on its cylindrical surface.

11. Device according to claim 5 or 10, wherein the cylindrical wall is located in the chamber center in its smaller diameter section, with the detonation products flowing from the center toward the periphery through the gap between the flat or conical walls.

12. Device according to claim 5 or 10, wherein the cylindrical wall has the biggest diameter and the detonation products escape through the hole of smaller diameter located in the center of one or both flat or conical chamber walls.

13. Device according to claim 5 or 11, wherein it constitutes an assembly of cylindrical, flat or conical combustion chambers with an individual or common oxidizer and fuel inlet(s) and an individual or common detonation products outlet(s).

14. Device according to claim 5 or 12, wherein it constitutes an assembly of cylindrical, flat or conical combustion chambers with an individual or common oxidizer and fuel inlet(s) and an individual or common detonation products outlet(s).
